# EUROPEAN PATENT SPECIFICATION

(11) **EP 0 407 144 B1**
(45) Date of publication and mention of the grant of the patent: **13.09.1995**
(21) Application number: 90307263.5
(22) Date of filing: 03.07.1990
(51) Int. Cl.: G06K 15/00, G06K 15/12, G06K 15/16

(54) **Printer**
Drucker
Imprimante

(30) Priority: 03.07.1989 JP 172684/89
(43) Date of publication of application: 09.01.1991
(73) Proprietor: SEIKO EPSON CORPORATION, Shinjuku-ku Tokyo (JP)
(72) Inventor: Iida, Kazuhiko, c/o Seiko Epson Corporation, Suwa-shi, Nagano-ken (JP); Koiwai, Masahiro, c/o Seiko Epson Corporation, Suwa-shi, Nagano-ken (JP)
(74) Representative: Sturt, Clifford Mark

(56) References cited:
- DE-A- 3 802 706
- US-A- 4 607 138
- PATENT ABSTRACTS OF JAPAN, vol. 13, no. 100 (M-805), 9th March 1989;& JP-A-63 288 771

## Description

The present invention relates to a printer, for example an optical beam write type page printer, which is adapted for use with optional accessories, such as a paper feeder, a sorter and a jogger.

A known optical beam write type page printer comprises a photo-sensitive drum provided in a printing path extending from a sheet receiving port to a sheet ejecting port of the printer. The drum has a conductivity, which varies in response to an optical beam modulated by an optical beam write device according to the printing data and directed onto the drum through a window. An electro-static charging means, the optical beam window, toner developing means, and toner recovering means are provided around the drum sequentially from an upstream side thereof.

This type of printer can print a pattern, such as characters, at high speed and with a high quality on the basis of the principle of xerography but is inherently adapted to print only a relatively small number of publications.

In the case of printing a large number of publications, an automatic sheet feeder and a sorter are generally added to the printer to be responsible for feeding and sorting sheets, and it becomes necessary to configure a consistent overall system from the sheet feeding process to the sorting one.

Such a printer, however, has the following short coming: the printer receives data from a small computer normally used as a host device and, when the automatic sheet feeder and the sorter are provided, they also have to be controlled by the host device. So, optional accessories, such as the automatic sheet feeder, are restricted by the specification of the printer and must be designed according to each specific printer.

The present invention, at least in its preferred form described below, seeks to provide an improved printer, which overcomes this shortcoming and which has a higher compatibility with optional accessories.

According to the present invention, there is provided a printer having a printing mechanism and control means for controlling the print mechanism, said control means comprising:
a first store for storing printing format data; and
operation means coupled to said first store,
characterised in that said control means further comprises receiving means for receiving specification data from an optional accessory; and a further store for storing said specification data, the operation means being coupled to said further store for controlling the operation of the optional accessory.

Since the printing mechanism control means saves printing format data matching a plural number of pages, the control means can give an indication of the next operation to the printing mechanism, and any external accessories, to permit preparation for this next operation without having to wait for further printing data sent from a host device following the printing of a current page.

As a result, it is possible to keep the parts, including any optional accessories, in a standby state time before the printing data is transferred. When the printing data is received, printing of the next page becomes possible, thereby improving the printing speed.

The present invention is described further, by way of example, with reference to the accompanying drawings, in which:-
Figure 1 is a diagrammatic view showing the external appearance of parts of a printing system to which the present invention is applied.
Figure 2 is a diagrammatic section through one embodiment of printer according to the present invention;
Figure 3 is a block diagram of control circuitry for the printer of Figure 2; and
Figure 4 is a flow chart illustrating the operation of the control circuitry of Figure 3.

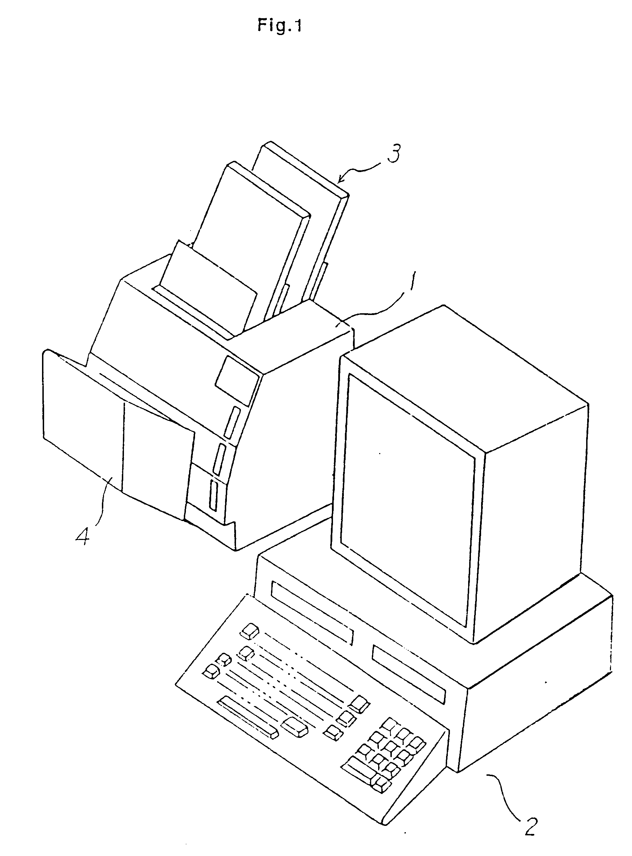

In Figure 1 a printer 1 operating on the principle of xerography is shown connected to a host device 2, in the form of a small computer, by a cable. An automatic sheet feeder 3 is mounted adjacent a sheet receiving port of the printer 1 and a sorter 4 is mounted adjacent a sheet ejecting port.

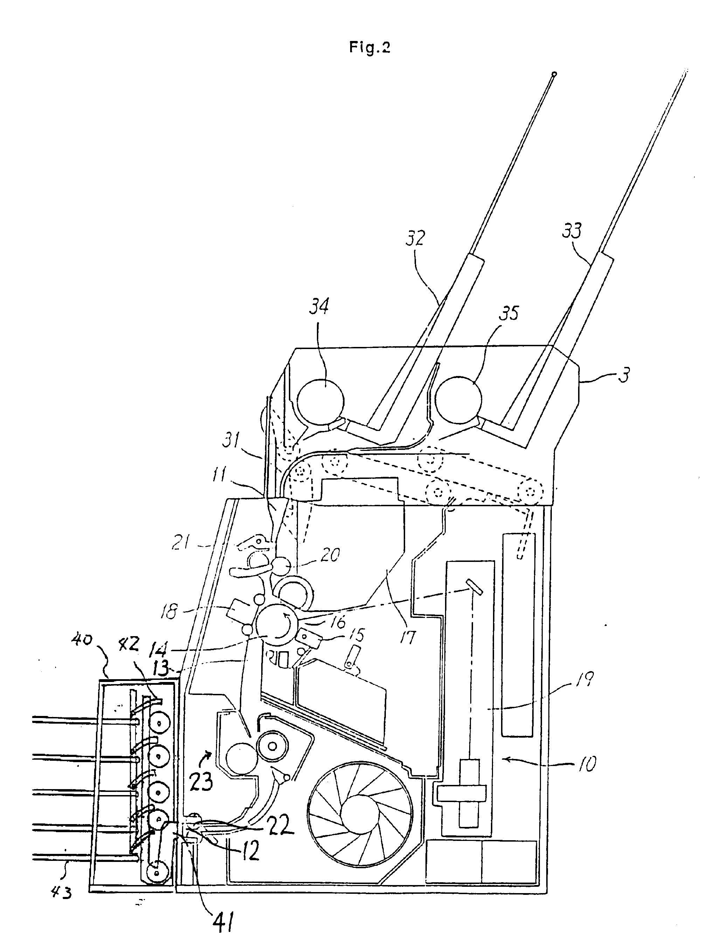

Figure 2 shows an embodiment of the aforementioned printer in greater detail. As shown, a printing mechanism 10 comprises a photo-sensitive drum 14 located in a manner so as to allow its surface to extend into a printing path 13 leading from a sheet receiving port 11 to a sheet ejecting port 12. The mechanism 10 further comprises an electro-static charging unit 15, an entrance window. for an optical beam 16, a toner developing unit 17, a transfer unit 18, and an optical beam write unit 19. These units are provided around the drum in the above described sequence from the up-stream side of the printing path. An optical beam is directed onto and moved axially of the photo-sensitive drum by the optical beam write unit 19, which is composed of a rotary polygonal mirror driven by a motor, and a laser beam. source serving to modulate the laser beam according to the printing data.

On the downstream side of the sheet receiving port 11 of the printer are provided a sheet detector 21, and a gate roller 20 arranged to feed a sheet according to a speed of rotation of the photo-sensitive drum 14. A fixing unit 23 is provided after the drum 14 for thermo-compression bonding toner attracted onto the sheet surface. Exhaust rollers 22, 22 are located near the sheet ejection port 12.

The automatic sheet feeder 3 automatically feeds each sheet into the printing mechanism 10, the automatic sheet feeder 3 having an exhaust portion 31 located facing the sheet receiving port 11. The automatic sheet feeder 3 comprises stackers 32 and 33 for retaining printing sheets, sheet feeding rollers 34, 35 for removing printing sheets from the stackers 32, 33 one by one, and a sheet feeding mechanism control unit (to be described later) for controlling a drive for the sheet feeding rollers 34, 35.

The sorter 4 is located to receive printed sheets from the printing mechanism 10, having a sheet entry port 41 located facing the sheet ejecting port 12. The sorter 4 comprises a classifying plate 42 for classifying each printed sheet, a tray 43 for receiving the printed sheet from the classifying plate 42, and a control unit (to be described later).

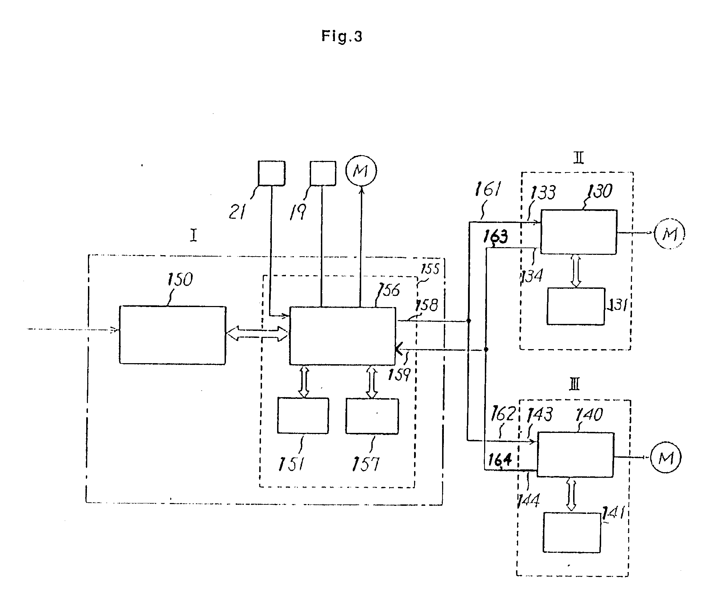

Figure 3 shows the control circuitry for the printer. As shown, I denotes the main control unit incorporated in the printer 1, II denotes the control unit incorporated in the automatic sheet feeder 3, and III denotes the control unit incorporated in the sorter 4.

The control unit I will be described first.

The control unit I comprises a main control circuit or micro-computer 150 containing a CPU (central processing unit), a RAM (random access memory), and a ROM (read only memory). The micro-computer 150 serves to output the printing data from the host device 2 to a printing mechanism control circuit 155 (to be described later), to interpret control instructions input from the host device and a surface panel of the printer, and to output the result to the printing mechanism control circuit 155.

The printing mechanism control circuit 155 controls the operation of the printing mechanism 10 and comprises a micro-computer 156 containing a CPU, a RAM and a ROM, a printing format data storage circuit 157, and a specification data storage circuit 151 for saving data concerning specifications of the automatic sheet feeder 3 and the sorter 4.

The micro-computer 156 serves to control according to a pre-stored program a revolution speed of the motor for scanning the rotary polygonal mirror, a reference timing matched to the start position for the optical beam scanning, a revolution speed of the photo-sensitive drum 14, the electro-static charging unit 15, the toner developing unit 17 and the transfer unit 18. It further serves to output a printing mechanism state signal, that is a status signal, to control the printing format data storage circuit 157 for saving printing format data, including sheet size, to control the specification data storage circuit 151 for storing the specifications of the sheet feeding unit and the sorter, and to output a timing signal through a terminal 158 for controlling the sheet feeding unit 3 and the sorter 4.

The control unit II built into the automatic sheet feeder 3 comprises a micro-computer 130 consisting of a CPU, a RAM and a ROM. The micro-computer 130 receives the timing signal from the printing mechanism control circuit 155 through a terminal 133 and controls a motor for driving the sheet feeding rollers 34, 35. The control unit II further comprises a specification storage circuit 131 for saving specification data relating to the automatic sheet feeder, for example data such as bin number and sheet feeding speed, the saved content of the specification storage circuit 131 being supplied through a terminal 134 in response to an enquiry from the printing mechanism control circuit 155.

The control unit III built into the sorter 4 comprises a micro-computer 140 containing a CPU, a RAM and a ROM, and serves to control a motor for driving the classifying plate 42 in response to the timing signal sent from the printing mechanism control circuit 155 through a terminal 143. The control unit 3 further comprises a specification storage circuit 141 for saving specification data relating to the sorter, for example data about sort timing and classifying number, the specification storage circuit 141 serving to supply the specification data through a terminal 144 in response to an enquiry from the printing mechanism control circuit 155.

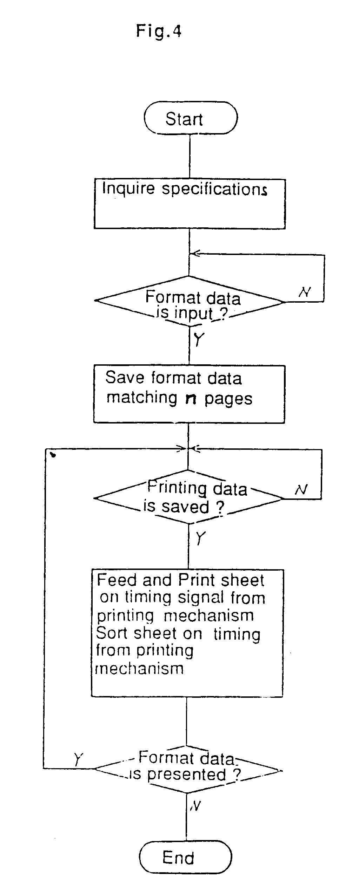

Next, the operation of the above system will be described with reference to the flow chart shown in Figure 4.

The printer 1 has the automatic sheet feeder 3 provided adjacent the sheet receiving port 11 and the sorter 4 provided adjacent the sheet ejecting port 12. The printing mechanism 10 is connected to the automatic sheet feeder 3 and the sorter 4 through signal cables 161, 162, and 163, 164 in a daisy chain manner.

When electric power is supplied to the overall system, the printing mechanism control circuit 155 supplies an enquiry signal about the specifications of the automatic sheet feeder 3, for example the bin number and sheet feeding speed, and of the sorter 4. The enquiry signal is input from the terminal 158 to the terminals 133, 143 of each unit through the cables 161 and 162 connected in a daisy chain manner.

The control unit II in the automatic sheet feeder 3 outputs the specification data about bin number and sheet feeding speed saved in the specification storage circuit 131. The control unit III in the sorter 4 outputs the sort speed and classifying numbers saved in the specification storage circuit 141. The data is supplied to the terminal 159 and thence to the printing mechanism control circuit 155 through the cables 163 and 164 connected in a daisy chain manner, thereby forcing the data to be saved in the specification data storage circuit 151.

As a result, the printing mechanism control circuit 155 is enabled to set environmental variables for the overall system based on such signals.

The main control circuit 150 determines the current overall system as a result of enquiring the information from the printing mechanism control circuit 155, and specifies the sheet feeding unit and the sorter in the case of outputting a printing start command.

At this stage, when the printing format for data to be printed, for example, the data concerning size of printing sheet and number of pages to be handled, is input from the host device and the surface panel of the printer 1, the data is read in the main control circuit 150 and then output to the printing mechanism control circuit 155. The printing mechanism control circuit 155 gives the command to enable the printing format data storage circuit 157 to pre-store the printing format data matching a specified number N of pages.

The main control circuit 150 saves the printing data sent from the host device 2 in a buffer. When the transfer of the printing data for one page is finished, the main control circuit 150 outputs a command instructing the start of printing to the printing mechanism control circuit 155. Then, the data for the second page is saved in the buffer.

At this stage, the printing mechanism control circuit 155 reads out the printing format data saved in the printing format data storage circuit 157. Based on the printing format data, the printing mechanism control circuit 155 sets the revolution speed of the motor for driving the rotary polygonal mirror, the reference timing matching the scanning start position for the optical beam, the revolution speed of the photo-sensitive drum 14, and the operation timing of the electro-static charging unit 15, the toner developing unit 17 and the transfer unit 18 of the printing mechanism 10. The printing mechanism control circuit 155 further outputs timing signals to the control units II and III of the automatic sheet feeder 3 and the sorter 4.

The control unit II serves to operate the driving motor of the automatic sheet feeder 3 based on the timing signal sent from the printing mechanism control circuit 155 so as to draw a printing sheet out of the stackers 32, 33 and feed it to the sheet receiving port 11 of the printer 1. The printing sheet is temporarily fixed on the gate roller 20, and the sheet detector 21 serves to output a signal.

When preparation for printing is finished, the printing mechanism control circuit 155 outputs a printing data transfer request to the main control circuit 150. The main control circuit 150 sends out the printing data to the printing mechanism control circuit 155 in response to the request.

Next, the printing mechanism control circuit 155 serves to operate the gate roller 20 to supply the printing sheet into the printing path 13, and, in synchronisation with the supply of the printing sheet, that is with the peripheral speed of the gate roller 20, the printing data is sent out to the optical beam write unit 19 for forming a latent image of the printing data on the photo-sensitive drum 14.

The latent image reaches the toner developing unit 17 at a speed determined by the peripheral speed of the photo-sensitive drum 14 and, in the toner developing unit 17, the latent image is converted into a toner image. The transfer unit 18 then serves to transfer the toner image to the printing sheet.

The printing sheet passes from the transfer unit 18 out through the sheet exhaust rollers 22, 22 after the toner is fixed on the surface of the printing sheet of the fixing unit 23.

The sorter 4 serves to arrange the classifying plate 42 so as to match the time when the sheet is expelled from the printing mechanism 10, based on the timing signal sent from the printing mechanism control circuit 155.

When printing of the first sheet is finished and the resultant sheet is expelled from the printing mechanism 10, as mentioned above, the sorter 4 receives the printed sheet on the classifying plate 42 and then passes it to the tray for the first page.

As the first printing sheet leaves the photo-sensitive drum 14, the printing mechanism control circuit 155 outputs the next page printing enable signal to the main control circuit 150 and then requests the printing start command for the second page from the main control circuit.

At this stage, the printing mechanism control circuit 155 reads the printing format data concerning the second sheet from the printing format data storage circuit 157 independently of the status of the main control circuit 150. Then, it begins to prepare for the next printing operation whilst awaiting the second page printing start command.

When the transfer of the printing data from the host device is finished, the main control circuit 150 outputs the printing start command. In response to this command, the printing mechanism control circuit 155 causes feeding of a sheet from the automatic sheet feeder 3 based on the printing format data for successive printing. Following printing, the printed sheet is expelled to the sorter 4.

In the case of replacing the optional accessories, such as the automatic sheet feeder 3 and the sorter 4, for changing the configuration of the overall system, the new accessories are mechanically fitted to the printer 1 and are connected to the main control unit I in a daisy chain manner through the signal cables 161, 162, and 163, 164.

Now, when the printer 1 is operated, the control unit I sends an enquiry signal for the specifications of the newly mounted automatic sheet feeder 3 and sorter 4. The control units II and III, which are external devices, send out the specification data saved in the specification storage circuits 131, 141. The main control unit I saves the specification data of the newly connected external units 3 and 4 in the storage circuit 151, thereby up-dating the system environment.

Accordingly, the operation of the overall printing system reliably maintains the printing speed of the printer independently of the specifications of additional printing sheet handling devices, such as the automatic sheet feeder and the sorter.

As described above, the main control unit contained in the printer itself is separated into a main control circuit and a printing mechanism control circuit. The main control circuit is responsible for receiving and processing the printing data from the host device, while the printing mechanism control circuit provides printing format data storage for a number of pages and serves to control saving of the printing format data. The printing mechanism is controlled on the basis of the format data. Since the process, apart from the transmission of the printing data, can be controlled on the operation timing of the printing mechanism, it is possible to make the most use of the efficiency of the printing mechanism. And, if means for receiving the timing signal from the printing mechanism control circuit is provided within optional accessories, such as the automatic sheet feeder and the sorter, these accessories can also be operated in accordance with the timing of the printing mechanism, thereby improving the compatibility of the various elements configuring the printing system.

Further, the main control unit of the printer is configured as a main and an auxiliary control circuit. The auxiliary control circuit serves to pick up the specifications of the accessories and makes it possible to generalise the control means dealing with the data, thereby making the overall system less costly.

## Claims

1. A printer having a printing mechanism (10) and control means (I) for controlling the print mechanism, said control means (I) comprising:
a first store (157) for storing printing format data; and
operation means (156) coupled to said first store,
characterised in that said control means (I) further comprises receiving means (159) for receiving specification data from an optional accessory (3,4); and a further store (151) for storing said specification data, the operation means (156) being coupled to said further store (151) for controlling the operation of the optional accessory (3,4).

2. A printer according to claim 1, in which said operation means (156) is arranged to generate a timing signal in the printing process for controlling the optional accessory (3,4).

3. In combination, the printer of claims 1 or 2 and the optional accessory (3,4).

4. A combination according to claim 3, in which said optional accessory comprises paper handling means (3,4) responsive to an output from the operation means for handling pages during printing.

5. A combination according to claim 4, in which the paper handling means comprises a store (131,141) for storing specification data relating to the paper handling means, and means (130,140) for supplying the specification data to the operation means (156) via the receiving means (159).

6. A combination according to claim 4 or 5, in which said paper handling means comprises an automatic sheet feeder (3), and in which a further paper handling means is provided which comprises a sorter (4).

## Patentansprüche

1. Drucker mit einem Druckmechanismus (10) und einem Steuermittel (I) zum Steuern des Druckmechanismus, wobei das Steuermittel (I) umfaßt:
einen ersten Speicher (157) zum Speichern von Druckformatdaten; und
ein mit dem ersten Speicher gekoppeltes Funktionsmittel (156),
dadurch gekennzeichnet,
daß das Steuermittel (I) ferner umfaßt:
ein Empfangsmittel (159) zum Empfangen von Spezifikationsdaten von einem optionalen Zubehör (3, 4); und
einen weiteren Speicher (151) zum Speichern der Spezifikationsdaten, wobei das Funktionsmittel (156) mit dem weiteren Speicher (151) gekoppelt ist zum Steuern der Funktion des optionalen Zubehörs (3, 4).

2. Drucker nach Anspruch 1, in dem das Funktionsmittel (156) dazu eingerichtet ist, während des Druckvorgangs ein Taktsignal zu erzeugen zum Steuern des optionalen Zubehörs (3, 4).

3. Kombination aus einem Drucker nach Anspruch 1 oder 2 und dem optionalen Zubehör (3, 4).

4. Kombination nach Anspruch 3, in der das optionale Zubehör ein Papierhandhabungsmittel (3, 4) umfaßt, das auf eine Ausgabe von dem Funktionsmittel zur Handhabung von Seiten während des Druckens anspricht.

5. Kombination nach Anspruch 4, in der das Papierhandhabungsmittel einen Speicher (131, 141) umfaßt zum Speichern von auf das Papierhandhabungsmittel bezogenen Spezifikationsdaten, und ein Mittel (130, 140) zur Zufuhr der Spezifikationsdaten zu dem Funktionsmittel (156) über das Empfangsmittel (159).

6. Kombination nach Anspruch 4 oder 5, in der das Papierhandhabungsmittel eine automatische Blattzuführung (3) umfaßt, und in der ein weiteres Papierhandhabungsmittel vorgesehen ist, das einen Sortierer (4) umfaßt.

## Revendications

1. Imprimante ayant un mécanisme d'impression (10) et un moyen de commande (I) pour commander le mécanisme d'impression, ledit moyen de commande (I) comprenant :
un premier dispositif de stockage (157) pour stocker des données de format d'impression ; et
un moyen de mise en oeuvre (156) relié audit premier moyen de stockage,
caractérisée en ce que ledit moyen de commande (I) comprend de plus un moyen de réception (159) pour recevoir des données de spécification en provenance d'un accessoire facultatif (3, 4) ; et un dispositif de stockage supplémentaire (151) pour stocker lesdites données de spécification, le moyen de mise en oeuvre (156) étant relié audit dispositif de stockage supplémentaire (151) pour commander le fonctionnement de l'accessoire facultatif (3, 4).

2. Imprimante selon la revendication 1, dans lequel ledit moyen de mise en oeuvre (156) est agencé pour produire un signal de cadencement dans le processus d'impression pour commander l'accessoire facultatif (3, 4).

3. En combinaison, imprimante selon les revendications 1 ou 2 et l'accessoire facultatif (3, 4).

4. Combinaison selon la revendication 3, dans laquelle ledit accessoire facultatif comprend un moyen de manipulation de papier (3, 4) sensible à une sortie en provenance du moyen de mise en oeuvre pour manipuler des pages pendant l'impression.

5. Combinaison selon la revendication 4, dans laquelle le moyen de manipulation de papier comprend un dispositif de stockage (131, 141) pour stocker des données de spécification relatives au moyen de manipulation de papier, et un moyen (130, 140) pour fournir les données de spécifications au moyen de mise en oeuvre (156) par l'intermédiaire du moyen de réception (159).

6. Combinaison selon la revendication 4 ou 5, dans laquelle ledit moyen de manipulation de papier comprend un dispositif automatique d'alimentation de feuille (3), et dans lequel un moyen supplémentaire de manipulation de papier est prévu, lequel comprend un trieur (4).
